Europäisches Patentamt

European Patent Office

Office européen des brevets

(19)

(11) Veröffentlichungsnummer : **0 023 705**
**B1**

# (12) EUROPÄISCHE PATENTSCHRIFT

(45) Veröffentlichungstag der Patentschrift :
11.05.83

(21) Anmeldenummer : 80104542.8

(22) Anmeldetag : 31.07.80

(51) Int. Cl.³ : **A 47 J 41/02**

(54) Isolierkanne.

(30) Priorität : 07.08.79 DE 2932022

(43) Veröffentlichungstag der Anmeldung :
11.02.81 Patentblatt 81/06

(45) Bekanntmachung des Hinweises auf die Patenterteilung : 11.05.83 Patentblatt 83/19

(84) Benannte Vertragsstaaten :
BE DE FR IT LU NL SE

(56) Entgegenhaltungen :
DE A 2 002 833
DE B 1 123 804
DE U 7 425 086
FR A 1 202 162
FR A 2 158 327
GB A 667 387
US A 4 090 648

(73) Patentinhaber : **Dr. Anso Zimmermann Isolierflaschen
Industriestrasse
D-6434 Niederaula (DE)**

(72) Erfinder : **Zimmermann, Anso, Dr.
Industriestrasse
D-6434 Niederaula (DE)**

(74) Vertreter : **Körber, Wolfhart, Dr. et al
Patentanwälte Dipl.Ing.H.Mitscherlich,
Dipl.Ing.K.Gunschmann, Dr.rer.nat.W.Körber,
Dipl.Ing.J.Schmidt-Evers Steinsdorfstrasse 10
D-8000 München 22 (DE)**

Isolierkanne

Die Erfindung bezieht sich auf eine Isolierkanne mit einem wärmeisolierenden Innenbehälter und einem diesen umgebenden Mantelteil, wobei der Innenbehälter zwischen einem vorzugsweise aus Kunststoff gespritzten Kopfteil und einem Bodenteil gehalten ist, welche mit dem Mantelteil verbunden sind, und bei der das Kopfteil zur Aufnahme eines Verschlusses und mit einem angeformten Ausgießer und einem sich entlang dem Mantelteil in einem Abstand nach unten erstreckenden Griff ausgebildet ist, der an seinem unteren Ende mit dem Mantelteil verbunden ist.

Derart aufgebaute Isolierkannen sind seit langem bekannt (GB-A-667, 387). Das Bodenteil ist dabei im allgemeinen in das Mantelteil einschraubbar, unmittelbar oder mittelbar über einen Zwischenring und dient dabei als Klemmteil mit Toleranzausgleich für den Glas-Innenbehälter. Der Glas-Innenbehälter wird durch das Bodenteil gegen das andererseits am Mantelteil festliegende Kopfteil, meist unter Einfügung eines Dichtringes, gehalten. Im allgemeinen bestehen dabei die Kopf- und Bodenteile aus gespritztem Kunststoff, während das Mantelteil aus dünnem Metallblech, außen verchromt oder emailliert, besteht.

Der Verbindungsbereich zwischen Mantelteil und Kopfteil ist kritisch, da über diese Verbindungsstelle alle Kräfte auf den Griff am Kopfteil geleitet werden müssen. Dies sind nicht nur statische Kräfte, sondern auch dynamische Kräfte und Kippkräfte, welche bei einem schnellen Hochheben, Tragen und Ausgießen der gefüllten Kanne auftreten. Die Befestigung des unteren Griffendes am Mantelteil ist nur ein geringer Festigkeitsbeitrag für die Übertragung, insbesondere der Kippkräfte, da man bestrebt ist, aus Kostengründen einen möglichst dünnen Metallmantel zu verwenden. Dieser wird durch mehr oder weniger punktförmig eingeleitete Kräfte leicht verbeult.

Der Erfindung liegt die Aufgabe zugrunde, die Verbindungsstelle zwischen Kopfteil und Mantel bzw. das Kopfteil so auszubilden, daß eine zuverlässige Übertragung aller Kräfte auf den Griff ermöglicht ist.

Zur Lösung dieser Aufgabe wird bei einer Isolierkanne der eingangs genannten Art vorgeschlagen, daß das mit einem oberen Rand des Mantelteiles mittels elastischer Rastzungen verrastete Kopfteil zumindest einen sich außerhalb des Mantelteiles unterhalb des Ausgießers und/oder des Griffs nach unten erstreckenden Ansatz aufweist, der den Mantelteil teilweise zangenartig eng umfaßt und das Kopfteil an der Mantelaußenfläche abstützt.

Diese Ausbildung des Kopfteiles mit Ansätzen ermöglicht eine dauerhafte und zuverlässige, herstellungstechnisch aber einfache und preisgünstige Verrastung des Kopfteiles mit dem Mantelteil. Trotzdem werden durch die Ansätze insbesondere die Kippkräfte gut und zuverlässig auf das Mantelteil und von diesem über das Bodenteil auf den den Behälterinhalt tragenden Innenbehälter übertragen. Während hinter einem Rand an der oberen Kante des Mantelteiles über den inneren Umfang verteilt die elastischen Rastzungen des Kopfteiles einrasten, erstrecken sich der oder die Ansätze außen an der Mantelfläche nach unten und bewirken somit ein enges zangengleiches Umfassen des Mantelteiles zumindest über einen bestimmten Umfangsbereich.

Wegen der zu übertragenden Kippkräfte sind daher der bzw. die Ansätze in zweckmäßiger Ausgestaltung der Erfindung unterhalb des Ausgießers und unterhalb des Griffes am Kopfteil angeordnet. In weiterer zweckmäßiger Ausgestaltung der Erfindung geht das untere Ende des unterhalb des Griffes angeordneten Ansatz in das freie Griffende einstückig über und ist mit dem Mantelteil, beispielsweise durch eine Schraube, verbunden.

Der unterhalb des Ausgießers am Kopfteil angeordnete Ansatz ist in zweckmäßiger Ausgestaltung der Erfindung nach Art eines Pharaonenbartes geformt. Diese Form ermöglicht neben der ästhetischen Wirkung ein breites Anliegen und Abstützen des Kopfteiles am Mantelteil während des Ausgießens durch Verkanten der Kanne am Griff. Gleichzeitig hat dieser Ansatz unterhalb des Ausgießers eine Schutzfunktion als Abtropfschutzschild. Die Tropfen, die sich am Ausgießer unvermeidlich immer wieder ergeben, laufen an dem Ansatz nach unten und kommen dort zur Ruhe, so dass die Tropfen nicht an der blanken Chromoberfläche des Mantelteiles herunterlaufen und dort Verschmutzungen hervorrufen, die immer wieder zu Ärger Anlaß geben. Es hat sich gezeigt, dass Tropfen an der Kunststoffoberfläche des Ansatzes durch die vorhandene höhere Adhäsion gegenüber einer Chromoberfläche sich « totlaufen ».

Eine beispielsweise Ausführungsform der Erfindung wird im folgenden anhand der beigefügten Zeichnungen beschrieben. Es zeigen

Figur 1 eine Isolierkanne in Seitenansicht ;

Figur 2 eine Schnittansicht des oberen Teiles der Isolierkanne entlang der Linie II-II in Fig. 1 ;

Figur 3 eine Schnittansicht entlang der Linie III-III in Fig. 2.

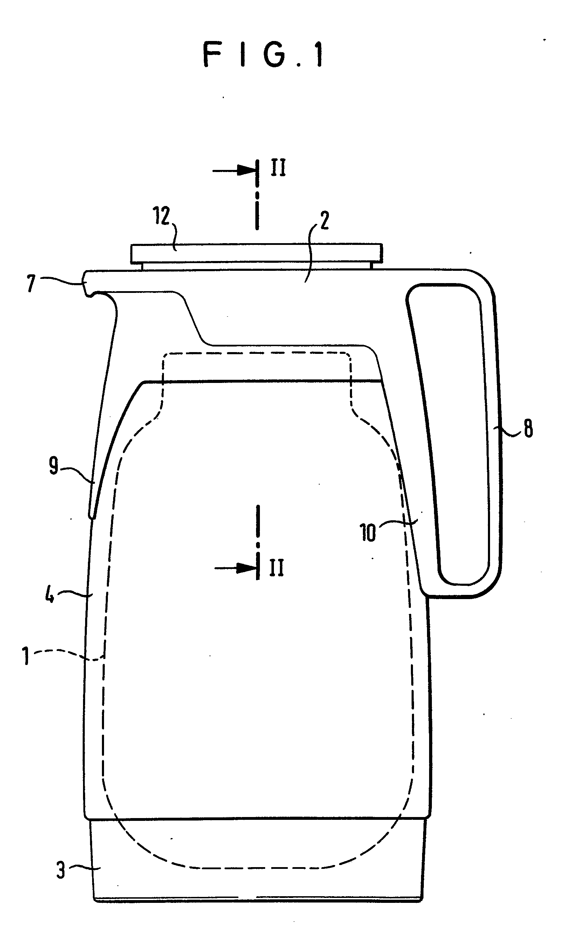

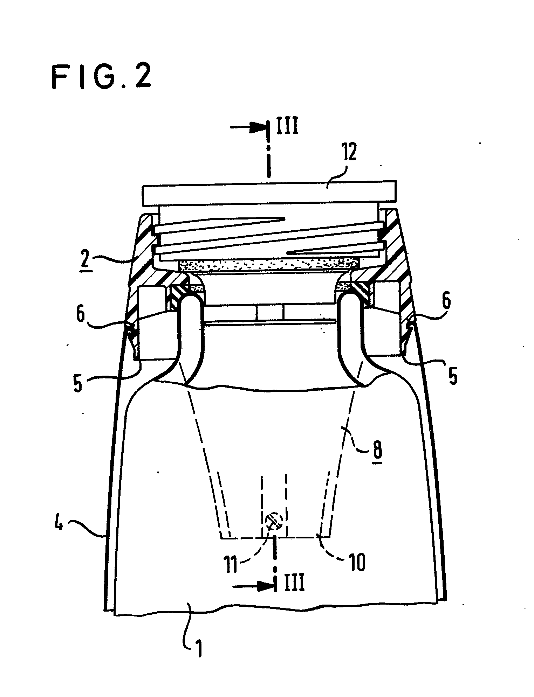

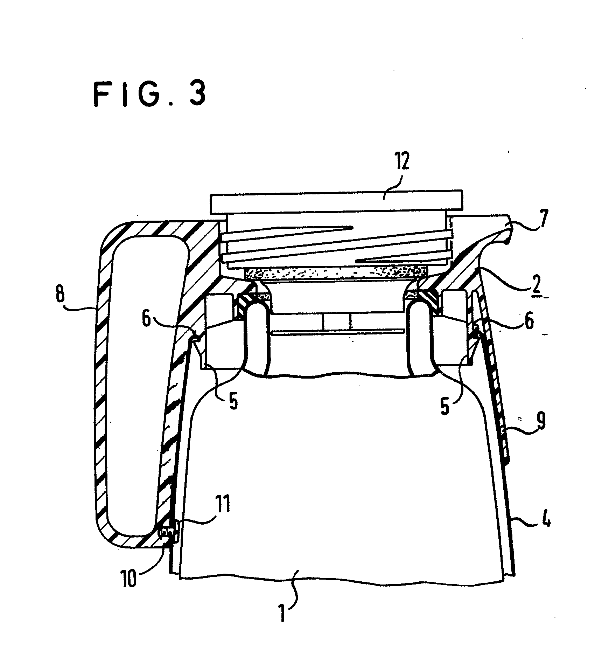

Wie aus den Fig. ersichtlich, besteht die Isolierkanne aus einem in Fig. 1 nur strichliert angedeuteten isolierenden Innenbehälter 1, welcher zwischen einem Kopfteil 2 und einem Bodenteil 3 innerhalb eines Mantelteiles 4 gehalten wird. Kopfteil 2 und Bodenteil 3 sind mit dem Mantelteil verbunden. Während der Bodenteil mit dem Mantelteil auf bekannte, hier nicht näher dargestellte, Weise verschraubt oder verrastet ist, ist, wie aus Fig. 2 und 3 näher ersichtlich der Kopfteil 2 mit über den Umfang verteilten Rastzungen 5 versehen, mit welchen er hinter eine Abkantung 6 am oberen Rand des Mantelteiles 3 verrastet ist.

Unterhalb des Ausgießers 7 und des Griffes 8 sind Ansätze 9 und 10 am Kopfteil einstückig angespritzt, welche im verrasteten Zustand der Rastzungen 5 hinter der Abkantung 6 eng am Mantelteil 4 anliegen und das Kopfteil 2 an der Mantelaussenfläche abstützen. Dadurch wären alle dynamischen insbesondere Kippkräfte vom Griff sicher auf den Mantel übertragen, auch wenn der Mantelteil aus Metallblech nur eine geringe Wandstärke hat. Bei der gezeigten Ausführungsform geht das untere Ende des Griffes 8 einstückig in den Ansatz 10 über, dieser ist mit einer Schraube 11 mit dem Mantelteil verbunden. Der in das Kopfteil einschraubbare Schraubverschluß der Isolierkanne ist mit 12 bezeichnet.

**Ansprüche**

1. Isolierkanne mit einem wärmeisolierenden Innenbehälter (1) und einem diesen umgebenden Mantelteil (4), wobei der Innenbehälter zwischen einem vorzugsweise aus Kunststoff gespritzten Kopfteil (2) und einem Bodenteil (3) gehalten ist, welche mit dem Mantelteil (4) verbunden sind, und bei der das Kopfteil (2) zur Aufnahme eines Verschlusses (12) und mit einem angeformten Ausgießer (7) und einem sich entlang dem Mantelteil in einem Abstand nach unten erstreckenden Griff (8) ausgebildet ist, der an seinem unteren Ende mit dem Mantelteil (4) verbunden ist, dadurch gekennzeichnet, daß das mit einem oberen Rand des Mantelteiles (4) mittels elastischer Rastzungen (5) verrastete Kopfteil (2) zumindest einen sich außerhalb des Mantelteils unterhalb des Ausgießers (7) und/oder im Bereich des Griffs (8) nach unten erstreckenden Ansatz (9, 10) aufweist, der den Mantelteil (4) teilweise zangenartig eng umfaßt und das Kopfteil (2) an der Mantelaußenfläche abstützt.

2. Isolierkanne nach Anspruch 1, dadurch gekennzeichnet, daß der Ansatz (10) breiter als der Griff (8) ist und sich nach unten zum freien Griffende leicht verjüngt.

3. Isolierkanne nach Anspruch 1 und/oder 2, dadurch gekennzeichnet, daß das untere Ende des Ansatzes (10) in das freie Griffende einstückig übergeht und mit dem Mantelteil (4) verbunden ist.

4. Isolierkanne nach Anspruch 1 bis 3, dadurch gekennzeichnet, daß sich der Ansatz (9) nach Art eines Pharaonenbartes vom Ausgießer (7) nach unten erstreckt.

5. Isolierkanne nach einem der vorhergehenden Ansprüche, dadurch gekennzeichnet, daß je ein Ansatz (9, 10) unterhalb des Ausgießers (7) und unterhalb des Griffes (8) am Kopfteil (2) angeordnet ist.

**Claims**

1. An insulating jug having a heat-insulating inner container (1) enclosed in a casing (4), the inner container being held between a top part (2), preferably made of injection moulded plastics material, and a base part (3), which parts are joined to the casing (4), and of which parts the top (2) is designed to receive a stopper (12), has a moulded pouring spout (7), and has a handle (8) extending down the casing (4) at a distance therefrom and joined at its lower end thereto, characterised in that the top part (2), which is retained on the upper edge of the casing (4) by means of elastic latching tongues (5), has at least one downward leading extension (9, 10) outside the casing (4) below the pouring spout (7) and/or in the region of the handle (8), which extension tightly encloses a part of the casing in a pincer-like manner and supports the top part (2) on the outer surface of the casing.

2. An insulating jug according to claim 1, characterised in that the extension (10) is wider than the handle (8) and tapers slightly downwards towards the free end of the handle.

3. An insulating jug according to claim 1 and/or 2, characterised in that the lower end of the extension (10) merges integrally into the free end of the handle and is joined to the casing (4).

4. An insulating jug according to claims 1 to 3, characterised in that the extension (9) extends down from the pouring spout (7) in the shape of a pharaoh's beard.

5. An insulating jug according to one of the preceding claims, characterised in that there is an extension (9, 10) disposed both below the pouring spout (7) and below the handle (8) on the top part (2).

**Revendications**

1. Pot isolant composé d'un récipient intérieur (1) isolant à la chaleur et d'une enveloppe (4) entourant ce dernier, le récipient intérieur étant tenu entre une partie supérieure (2), de préférence en matière plastique moulée par injection, et une partie inférieure (3), qui sont toutes les deux jointes à l'enveloppe (4), et dans lequel la partie supérieure (2) est formée de façon à recevoir un bouchon (12) et pourvue d'un bec-verseur (7) moulé et d'une anse (8) qui s'étend vers le bas à une distance le long de l'enveloppe, et dont l'extrémité inférieure est jointe à cette enveloppe (4), caractérisé en ce que la partie supérieure (2), arrêtée dans un bord supérieur de l'enveloppe (4) au moyen de pointes d'arrêt (5) élastiques, est pourvue au moins d'une rallonge (9, 10), qui s'étend vers le bas et se trouve à l'extérieur de l'enveloppe au-dessous du bec-verseur (7) et/ou dans la région de l'anse (8), et qui encercle très étroitement une partie de cette enveloppe (4) et supporte la partie supérieure (2) à la surface supérieure de l'enveloppe.

2. Pot isolant selon la revendication 1, caractérisé en ce que la rallonge (10) est plus large que l'anse (8) et va légèrement en décroissant vers le bas de l'extrémité libre de l'anse.

3. Pot isolant selon la revendication 1 et/ou 2, caractérisé en ce que la partie inférieure de la rallonge (10) forme une seule pièce avec l'extrémité libre de l'anse et est jointe à l'enveloppe (4).

4. Pot isolant selon la revendication 1 à 3, caractérisé en ce que la rallonge (9) s'étend vers le bas à partir du bec-verseur (7) à la façon d'une barbe de pharaon.

5. Pot isolant selon une des revendications précédentes, caractérisé en ce qu'il existe une rallonge (9, 10) au-dessous du bec-verseur (7) et une à la partie supérieure (2) au-dessous de l'anse (8).

# F I G . 1

# FIG.2

# FIG. 3